# EUROPEAN PATENT APPLICATION

(11) **EP 4 670 586 A1**
(43) Date of publication of application: **31.12.2025**
(21) Application number: 25160116.7
(22) Date of filing: 25.02.2025
(51) Int. Cl.: A47J 37/06, F24C 15/32

(54) **A CENTRIFUGAL IMPELLER AND AN ASSOCIATED AIR FRYER**

(30) Priority: 26.06.2024 CN 202410837162; 23.08.2024 CN 202422061373 U
(71) Applicant: Zhejiang Biyi Electric Appliance Co., Ltd., Yuyao, Zhejiang 315400 (CN)
(72) Inventor: LOU, Hongxian, Yuyao (CN); YE, Qianchao, Yuyao (CN)
(74) Representative: ZHAOffice SPRL

(57) **Abstract**

The present invention relates to a centrifugal impeller and an associated air fryer, aimed at addressing the technical issue arising from the defective design of the fan blade structure found in existing comparable products. This deficiency results in inadequate uniformity of the airflow and temperature field distribution, diminished cooking performance, and a reduced baking success rate. The body of the centrifugal impeller is an irregular inclined fan blade, the said irregular inclined fan blade is a cross-flow fan blade; wherein the round disc plate on the inner side below the annular plate of the said irregular inclined fan blade is formed by outwardly stamping and protruding. The irregular inclined fan blades of the said structure are used in the air fryer featuring rear air heating. These blades are positioned within the back heat shield to facilitate the circulation of air within the hot air channel of the cavity. The air in the cold air channel is circulated through the use of stirring fan blades located behind the irregular inclined air blades.

## Description

### FIELD OF TECHNOLOGY

The present invention relates to impellers designed for air fryers, specifically a centrifugal impeller and an associated air fryer.

### BACKGROUND OF THE INVENTION

Air fryer is a new household appliance for food frying by using high-speed air circulation, the food cooked by air fryer can reduce 80% of the oil and fat compared to traditional electric fryer. Air fryer is also easy to clean and its safety feature and affordable cost are highly favored. Currently, certain air fryers available in the market that utilize a centrifugal impeller within a cross-flow air blade design face several technical challenges. The existing hot air system disposed on top of air fryers, which features a centrifugal impeller, tends to produce excessively high forehead, particularly in vertical double boiler models, often causing an overall product height to be a little high. The centrifugal impeller is not ideally suited for vertical double pot configurations. Additionally, the performance of back-blowing air fryers currently available on the market generally falls short of that of traditional air fryers. This inadequacy is primarily evident in the inconsistent distribution of the airflow and temperature fields. In traditional back-blowing air fryers, the heating tube is positioned at the rear portion, which adversely affects the cooking performance of potato chips. Specifically, the cooking yield for 400 grams of potato chips is below 60%, with excessive browning occurring near the handle while the chips positioned farther away from the handle remain largely unbrowned. This discrepancy indicates a lack of uniform energy distribution within the pot. To address the challenges associated with the cooking of potato chips, particularly regarding the uniformity of the airflow and temperature fields, certain existing back-blowing air fryers have been designed with an additional heating tube positioned above the main body of the pot. This design is illustrated in Chinese patent application No. 202410614755.4, published on July 12, 2024, titled "A back-blowing air fryer and control method"; however, the fan blades utilized in these products, as well as in similar models, primarily feature stirring fan blades. Some comparable products utilizing cross-flow fan blades continue to experience challenges regarding the uniformity of airflow and temperature distribution, indicating that the thermal efficiency of these devices requires further enhancement.

### SUMMARY OF THE INVENTION

To address the aforementioned deficiencies, the present invention aims to release a centrifugal impeller and an associated air fryer to the field. This innovation seeks to resolve the technical challenges related to inadequate uniformity in airflow and temperature field distribution, suboptimal cooking performance, and low baking success rates that arise from the inadequately designed airfoil structures found in existing similar products. The object is accomplished through the implementation of the following technical solution.

The body of the centrifugal impeller is an irregular inclined fan blade, an inclined spacer is provided on the circumferential surface between the annular plate and the round disc plate of the said irregular inclined fan blade. Lugs on both sides of the inclined spacer are inserted into the holes of the annular plate and the round disc plate, then bent and fixed as one. The center of the round disc plate is equipped with the through-shaft hole. The said irregular inclined fan blade is a cross-flow fan blade; wherein the round disc plate on the inner side below the annular plate of the said irregular inclined fan blade is formed by outwardly stamping and protruding, and the angle of the slanting surface at the round disc plate under the annular plate with respect to the horizontal bottom surface of the inner side of the round disc plate stamped and protruded is 120 degrees to 160 degrees, with the best being an angle of 153 degrees. The said structure promotes the formation of a helical airflow cavity at the back of the irregular inclined fan blade, enhancing the consistency of the airflow and temperature field distributions within the cavity during air inflows and outflows.

The horizontal bottom surface at the inner stamped protrusion of the round disc plate of the said non-standard inclined fan blade is provided with stamped grooves distributed at equal distances. In addition to the stamped grooves present on the round disc plate, additional holes may be incorporated as required to assist in the installation of the components associated with the said irregular inclined fan blade.

An example of the application of the irregular inclined fan blades, based on the aforementioned structural characteristics, is illustrated in the context of an air fryer driving out and heating air from rear outlets: the inner liner at the shell of the air fryer comprises a metal liner, and a metal heat shield at the top of the metal liner, a heating tube is provided in a groove at the top of the metal heat shield above the top of the metal liner; the through-holes on one side of the irregular inclined fan blade in the shell of the metal liner comprise a primary air outlet, an air inlet, and a secondary air outlet; the primary air outlet is positioned in alignment with an opening located on one side of the groove of the metal heat shield; the opposite side of this groove is disposed in relation to the inner wall of the inner pot within the pot assembly below, connected by a curved surface; the air inlet is situated centrally beneath the primary air outlet within the metal liner, while the secondary air outlet is also located in the metal liner, directly beneath the air inlet; a pot assembly is provided at the opening on one side of the metal liner; the handle of the pot assembly extends out of the opening of the metal liner; the back of the inner pot, positioned symmetrically on the opposite side of the pot assembly within the opening of the metal liner, features a series of pot holes distributed at equal spaces; a back heat shield is disposed within the rear shell of the metal liner at the primary air outlet set opposite to the pot hole; the said irregular inclined fan blade is affixed to the back heat shield; the stirring fan blade is mounted on the motor bracket located at the rear of the back heat shield; hollowed-out holes accessible to the cold air channel that exists between the outer diameter of the back heat shield and the inner side of the shell are disposed on both sides of the motor bracket and one side of the rear plane; a shaded pole motor is provided at the rear of the motor bracket, with its rotating shaft connected simultaneously to the stirring fan blade and the irregular inclined fan blade; the shaded pole motor and the heating tube are engaged to the PCB control assembly via wiring; the said stirring fan blade is a metal fan blade. The heating tube described above is either a coil tube or a carbon tube. To simplify the installation process, the heating tube is designed to align with the top portion of the metal heat shield, positioned centrally or at alternative locations equipped with a hoop buckle mounting point. The stirring fan blades are primarily utilized for circulating air within the cold air channel, while the irregular inclined air blades are specifically designed for facilitating air circulation within the hot air channel of the cavity.

The air inlet of the said metal liner is configured in a circular pattern and positioned in the middle portion of the primary air outlet and the secondary air outlet located at the top and bottom. The primary air outlet and the secondary air outlet are designed as rectangles, with the width of the auxiliary air outlet holes being less than that of the primary air outlet holes, and the diameter of the air inlet holes being less than the width of the secondary air outlet holes. The structural design of the said primary air outlet, air inlet, and secondary air outlet hole further enhances the uniformity of the airflow field and temperature field by optimizing the gas cycle within the upper and lower sections of the cavity.

Side air vents are symmetrically disposed on both sides of the air inlet of the said metal liner; the said side air vents, along with the secondary air outlet, are arranged in a U-shape; the side air vents are positioned within the opening of the back heat shield located at the rear of the metal liner.

A curved side of the said metal heat shield is provided with a cap rim that extends forward; The said cap rim is integrally formed with the groove on the curved surface of the metal heat shield, as well as with the edges on both sides of the said groove. The metal heat shield described above features upper air vents located at the cap rim and on the shell of the pot assembly beneath the cap rim. Additionally, it includes lower air vents positioned at the bottom of the pot assembly shell and at the corresponding metal liner, as required.
the airflow guiding bars that are equally spaced in the upper and lower portions and protruded are located on the inner wall of the inner pot within the pot assembly beneath the curved side of the metal heat shield; the said airflow guiding bars may either be integrally stamped and molded with the inner pot or be part of an airflow guiding member that is affixed to the inner wall of the inner pot within the pot assembly.

An NTC temperature sensor extending into a groove is disposed on one side of the metal heat shield at the said heating tube; the NTC temperature sensor is connected to the PCB control assembly via wiring. The NTC temperature sensor is more precisely positioned for measuring temperature.

The inner pot of the said pot assembly features a pot hole that is designed as an inner hexagonal hole, which extends from the rear portion to the rear end of the connected sides. The configuration of the pot hole in the said pot body is not restricted to the hexagonal shape as described above.

The present invention features a reasonable structural design that facilitates efficient production and assembly. It offers a broad range of applications and ensures excellent uniformity in the airflow and temperature field distribution. This structure is particularly effective for cooking potato chips, leading to a high baking success rate. The present invention is ideally suited for use as a centrifugal impeller in an air fryer, specifically designed for models with back airflow heating, and it facilities the modification of comparable product structures.

### ACCOMPANYING DRAWINGS

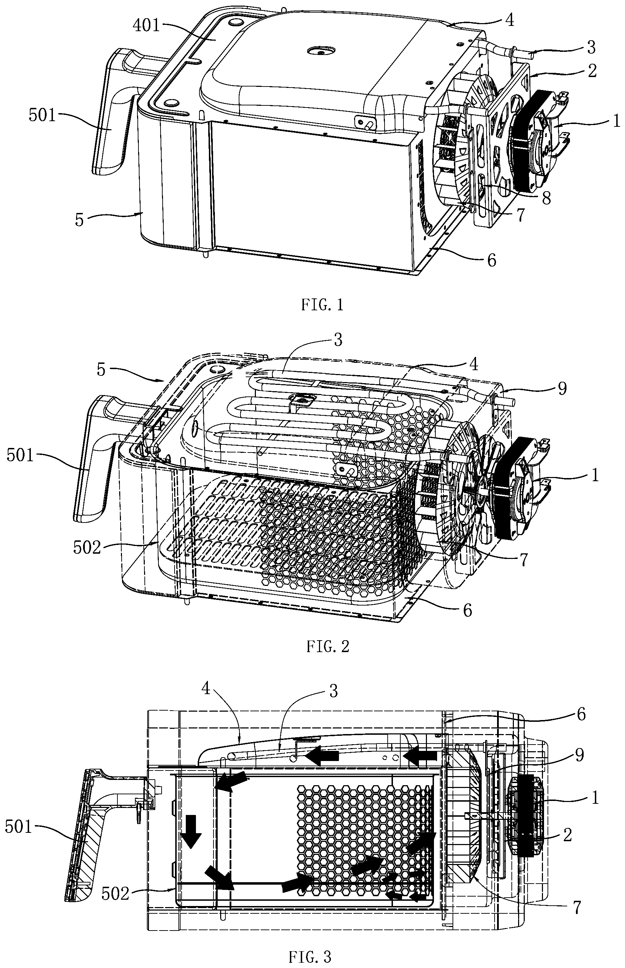

FIG. 1 is a schematic diagram of a part of the structure of the state of use of the present invention.
FIG. 2 is a schematic diagram of the internal structure of FIG. 1.
FIG. 3 is a schematic diagram of the whole sectional structure of the state of use of FIG. 1, and the arrows in the diagram are the gas circulation of the upper and lower portions within the cavity.

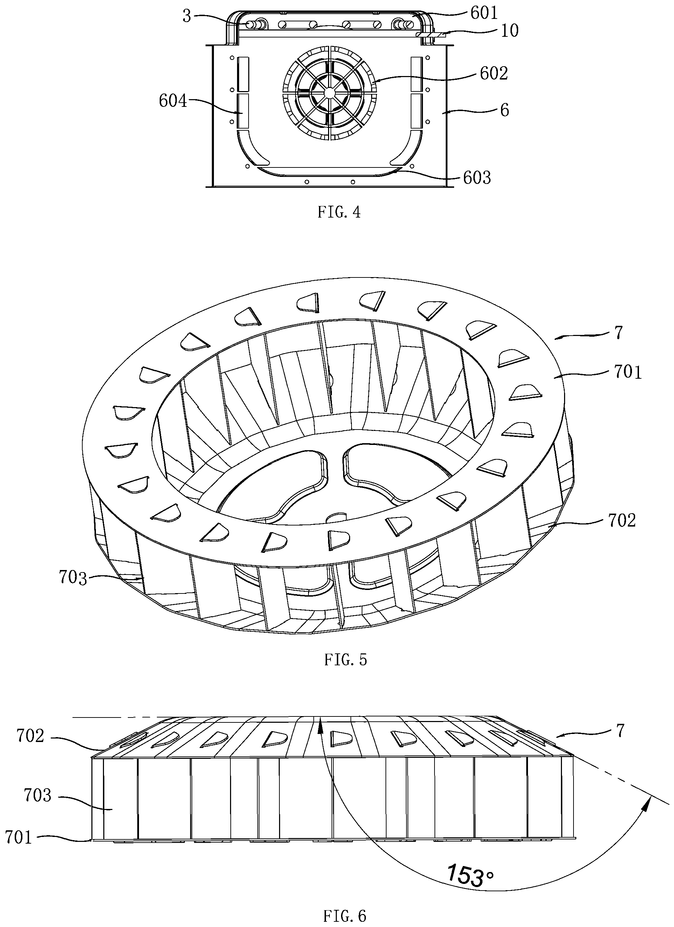

FIG. 4 is a schematic diagram of the structure of the through-hole layout at the metal liner of FIG. 1.
FIG. 5 is a three-dimensional enlarged structure schematic diagram of the irregular inclined fan blade of FIG. 1.
FIG. 6 is a side view structural schematic diagram of FIG. 5.
FIG. 7 is a comparison chart in respect of the calculation results of the simulation cloud map and air speed histogram between the irregular inclined fan blade of the present invention and the existing impeller.

Serial numbers and names of the accompanying drawings: 1. shaded pole motor, 2. motor bracket, 3. heating tube, 4, metal heat shield, 401, cap rim, 5, pot assembly, 501, handle, 502, inner pot, 6, metal liner, 601, primary air outlet, 602, air inlet, 603, secondary air outlet, 604, side air vent, 7, irregular slanting impeller, 701, annular plate, 702, round disc plate, 703, inclined spacer, 8, stirring air blade, 9, back heat shield, 10, NTC temperature sensor.

### EMBODIMENTS

The organization and application of the present invention are illustrated in conjunction with the accompanying drawings. The body of the centrifugal impeller is an irregular inclined fan blade 7, an inclined spacer 703 is provided on the circumferential surface between the annular plate 701 and the round disc plate 702 of the said irregular inclined fan blade. Lugs on both sides of the inclined spacer are inserted into the holes of the annular plate and the round disc plate, then bent and fixed as one. The center of the round disc plate is equipped with the through-shaft hole. The said irregular inclined fan blade is a cross-flow fan blade; wherein the round disc plate 702 on the inner side below the annular plate 701 of the said irregular inclined fan blade 7 is formed by outwardly stamping and protruding, and the angle of the slanting surface at the round disc plate under the annular plate with respect to the horizontal bottom surface of the inner side of the round disc plate stamped and protruded is 120 degrees to 160 degrees, with the best being an angle of 153 degrees. The horizontal bottom surface at the inner stamped protrusion of the round disc plate of the said irregular inclined fan blade is provided with stamped grooves distributed at equal distances. The stamped groove of the centrifugal impeller is designed with four symmetrically arranged arc-shaped grooves, although alternative shapes may also apply.

The said irregular inclined air blades are used in the air fryer featuring back-blowing and heating. The inner liner at the shell of the air fryer comprises a metal liner 6, and a metal heat shield 4 at the top of the metal liner, a heating tube 3 is provided in a groove at the top of the metal heat shield above the top of the metal liner; the through-holes on one side of the irregular inclined fan blade 7 in the shell of the metal liner comprise a primary air outlet 601, an air inlet 602, and a secondary air outlet 603; the primary air outlet is positioned in alignment with an opening located on one side of the groove of the metal heat shield; the opposite side of this groove is disposed in relation to the inner wall of the inner pot 502 within the pot assembly 5 below, connected by a curved surface; the air inlet is situated centrally beneath the primary air outlet within the metal liner, while the secondary air outlet is also located in the metal liner, directly beneath the air inlet; a pot assembly is provided at the opening on one side of the metal liner; the handle 501 of the pot assembly extends out of the opening of the metal liner; the back of the inner pot, positioned symmetrically on the opposite side of the pot assembly within the opening of the metal liner, features a series of pot holes distributed at equal spaces; a back heat shield 9 is disposed within the rear shell of the metal liner at the primary air outlet set opposite to the pot hole; the said irregular inclined fan blade is affixed to the back heat shield; the stirring fan blade 8 is mounted on the motor bracket 2 located at the rear of the back heat shield; hollowed-out holes accessible to the cold air channel that exists between the outer diameter of the back heat shield and the inner side of the shell are disposed on both sides of the motor bracket and one side of the rear plane; a shaded pole motor 1 is provided at the rear of the motor bracket, with its rotating shaft connected simultaneously to the stirring fan blade and the irregular inclined fan blade; the shaded pole motor and the heating tube are engaged to the PCB control assembly via wiring; the said stirring fan blade is a metal fan blade.

The air inlet of the said metal liner is configured in a circular pattern and positioned in the middle portion of the primary air outlet and the secondary air outlet located at the top and bottom. The primary air outlet and the secondary air outlet are designed as rectangles, with the width of the auxiliary air outlet holes being less than that of the primary air outlet holes, and the diameter of the air inlet holes being less than the width of the secondary air outlet holes. Side air vents 604 are symmetrically disposed on both sides of the air inlet of the said metal liner; the said side air vents, along with the secondary air outlet, are arranged in a U-shape; the side air vents are positioned within the opening of the back heat shield located at the rear of the metal liner. A curved side of the said metal heat shield is provided with a cap rim 401 that extends forward; the said cap rim is integrally formed with the groove on the curved surface of the metal heat shield, as well as with the edges on both sides of the said groove. The airflow guiding bars that are equally spaced in the upper and lower portions and protruded are located on the inner wall of the inner pot within the pot assembly beneath the curved side of the metal heat shield; the said airflow guiding bars may either be integrally stamped and molded with the inner pot or be part of an airflow guiding member that is affixed to the inner wall of the inner pot within the pot assembly. An NTC temperature sensor 10 extending into a groove is disposed on one side of the metal heat shield at the said heating tube; the NTC temperature sensor is connected to the PCB control assembly via wiring. The inner pot of the pot assembly features a pot hole that is designed as an inner hexagonal hole, which extends from the rear portion to the rear end of the connected sides.

The said metal heat shield is equipped with upper air vents located at the cap rim and at the shell of the pot assembly beneath the cap rim, as required. Additionally, lower air vents are disposed at the base of the shell of the pot assembly and at the corresponding metal liner, as required. The grill is positioned at the base of the inner pot, as required. The shaded pole motor, motor bracket, stirring fan blade, rear heat shield, and irregular inclined fan blade are integrated into the back cover of the shell, which forms the enclosure of the body.

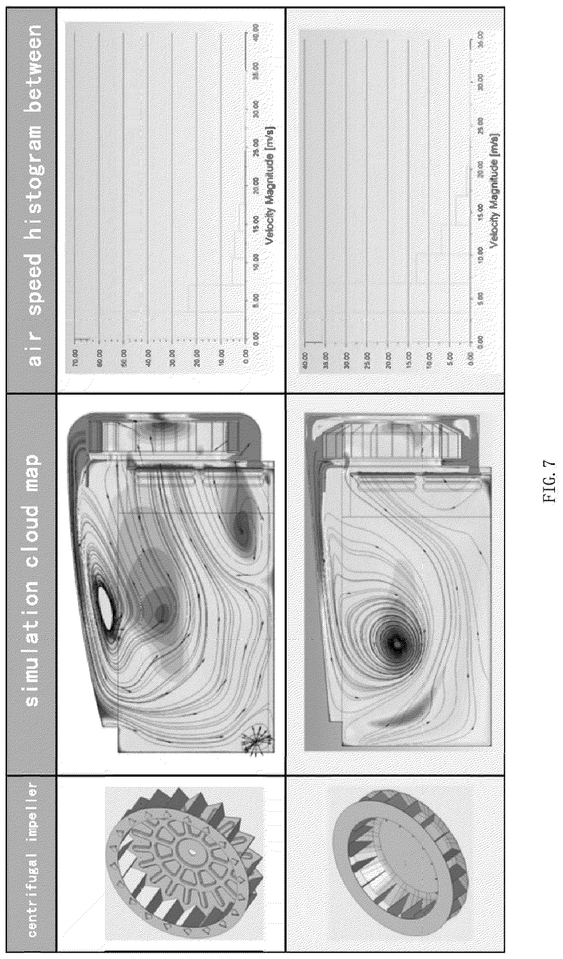

As illustrated in Fig. 7, the fluid flow contour map indicates that the air produced from an existing impeller impacts the air frying wall surface radially oriented towards the impeller, resulting in a dramatic energy loss. The present invention features an irregular inclined fan blade on the main body, which makes air outflows smoother by increasing the slope level of the main body. The histogram demonstrates a notable increase in wind speed within the cavity, and the airflow field performance is comparable to the traditional method of outflowing and heating from the top of air fryers.

In conclusion, the irregular inclined fan blade of the present invention delivers some benefits as described below: 1. It facilitates the introduction of heating energy into the cavity through forced convection; 2. It ensures a smooth delivery of fluid into the cavity via a flow-guided structure. The aforementioned structure also improves the uniformity of the temperature field within the air fryer and enhances thermal efficiency. The shaded pole motor powers the stirring fan blades and the irregular inclined fan blades, transferring energy from the heating pipe to the cavity through forced convection, and the heating tube primarily transmits energy to the cavity in the form of heat radiation.

## Claims

1. A centrifugal impeller, the body of the centrifugal impeller is an irregular inclined fan blade (7), an inclined spacer (703) is provided on the circumferential surface between the annular plate (701) and the round disc plate (702) of the said irregular inclined fan blade. Lugs on both sides of the inclined spacer are inserted into the holes of the annular plate and the round disc plate, then bent and fixed as one. The center of the round disc plate is equipped with the through-shaft hole. The said irregular inclined fan blade is a cross-flow fan blade; wherein the round disc plate (702) on the inner side below the annular plate (701) of the said irregular inclined fan blade (7) is formed by outwardly stamping and protruding, and the angle of the slanting surface at the round disc plate under the annular plate with respect to the horizontal bottom surface of the inner side of the round disc plate stamped and protruded is 120 degrees to 160 degrees, with the best being an angle of 153 degrees.

2. A centrifugal impeller according to Claim 1, wherein the horizontal bottom surface at the inner stamped protrusion of the round disc plate (702) of the said irregular inclined fan blade (7) is provided with stamped grooves distributed at equal distances.

3. An air fryer utilizing the centrifugal impeller as described in Claims 1-3, wherein the inner liner at the shell of the air fryer comprises a metal liner (6), and a metal heat shield (4) at the top of the metal liner, a heating tube (3) is provided in a groove at the top of the metal heat shield above the top of the metal liner; the through-holes on one side of the irregular inclined fan blade (7) in the shell of the metal liner comprise a primary air outlet (601), an air inlet (602), and a secondary air outlet (603); the primary air outlet is positioned in alignment with an opening located on one side of the groove of the metal heat shield; the opposite side of this groove is disposed in relation to the inner wall of the inner pot (502) within the pot assembly (5) below, connected by a curved surface; the air inlet is situated centrally beneath the primary air outlet within the metal liner, while the secondary air outlet is also located in the metal liner, directly beneath the air inlet; a pot assembly is provided at the opening on one side of the metal liner; the handle (501) of the pot assembly extends out of the opening of the metal liner; the back of the inner pot, positioned symmetrically on the opposite side of the pot assembly within the opening of the metal liner, features a series of pot holes distributed at equal spaces; a back heat shield (9) is disposed within the rear shell of the metal liner at the primary air outlet set opposite to the pot hole; the said irregular inclined fan blade is affixed to the back heat shield; the stirring fan blade (8) is mounted on the motor bracket (2) located at the rear of the back heat shield; hollowed-out holes accessible to the cold air channel that exists between the outer diameter of the back heat shield and the inner side of the shell are disposed on both sides of the motor bracket and one side of the rear plane; a shaded pole motor (1) is provided at the rear of the motor bracket, with its rotating shaft connected simultaneously to the stirring fan blade and the irregular inclined fan blade; the shaded pole motor and the heating tube are engaged to the PCB control assembly via wiring; the said stirring fan blade is a metal fan blade.

4. An air fryer according to Claim 3, wherein the air inlet (602) of the said metal liner (6) is configured in a circular pattern and positioned in the middle portion of the primary air outlet (601) and the secondary air outlet (603) located at the top and bottom. The primary air outlet and the secondary air outlet are designed as rectangles, with the width of the auxiliary air outlet holes being less than that of the primary air outlet holes, and the diameter of the air inlet holes being less than the width of the secondary air outlet holes.

5. An air fryer according to Claim 4, wherein side air vents (604) are symmetrically disposed on both sides of the air inlet (602) of the said metal liner; the said side air vents, along with the secondary air outlet (603), are arranged in a U-shape; the side air vents are positioned within the opening of the back heat shield (9) located at the rear of the metal liner.

6. An air fryer according to Claim 3, wherein a curved side of the said metal heat shield (4) is provided with a cap rim (401) that extends forward; The said cap rim is integrally formed with the groove on the curved surface of the metal heat shield, as well as with the edges on both sides of the said groove.

7. An air fryer according to Claim 3, wherein the airflow guiding bars that are equally spaced in the upper and lower portions and protruded are located on the inner wall of the inner pot (502) within the pot assembly (5) beneath the curved side of the metal heat shield; the said airflow guiding bars may either be integrally stamped and molded with the inner pot or be part of an airflow guiding member that is affixed to the inner wall of the inner pot within the pot assembly.

8. An air fryer according to Claim 3, wherein an NTC temperature sensor (10) extending into a groove is disposed on one side of the metal heat shield (4) at the said heating tube (3);
the NTC temperature sensor is connected to the PCB control assembly via wiring.

9. An air fryer according to Claim 3, wherein the inner pot (502) of the pot assembly (5) features a pot hole that is designed as an inner hexagonal hole, which extends from the rear portion to the rear end of the connected sides.
